# EUROPEAN PATENT APPLICATION

(11) **EP 4 699 729 A1**
(43) Date of publication of application: **25.02.2026**
(21) Application number: 24195677.0
(22) Date of filing: 21.08.2024
(51) Int. Cl.: B23K 20/12

(54) **METHOD AND APPARATUS FOR FRICTION STIR SPOT WELDING**

(71) Applicant: Helmholtz-Zentrum hereon GmbH, 21502 Geesthacht (DE)
(72) Inventor: Niklaas, Becker, 22397 Hamburg (DE); Benjamin, Klusemann, 21382 Brietlingen (DE)
(74) Representative: Bird & Bird LLP - Hamburg

(57) **Abstract**

Disclosed is an apparatus and method of refill friction stir spot welding, comprising providing a welding tool (no) comprising a probe (102), a tubular shoulder (104) and clamping ring (106), the probe (102) being located inside and axially aligned with the tubular shoulder (104) along a weld axis (108) and the tubular shoulder (104) being located inside and axially aligned with the clamping ring (106) along the weld axis; providing a support (114) for securing a weld object (112) to be welded thereto; arranging a weld object (112) to the support (114), the weld object (112) comprising at least two weld components (112a, 112b), a first component (112a) comprising a weld surface and being located between the welding tool and the second component; locating a gap (118) between the weld surface and the support (114); locating the welding tool (no) on the weld surface so as to align the gap (118) with the weld axis (108); rotating the probe (102) and the shoulder (104) so as to heat the weld object (112) and form a volume of increased plasticity in the weld object (112) proximate the welding tool (no); moving one of the probe (102) and the shoulder (104) towards the weld object (112) along the weld axis (108); providing a force from the welding tool (110) onto the weld object (112) in the direction of the weld axis (108) so as to deform the weld object (112) into the gap (118).

## Description

The present invention relates to a method for performing refill friction stir spot welding.

The joining together of two components by welding is a widely known process. Typically, the method of welding involves securing two metals in contact and applying heat to a consumable material (e.g. in the form of a consumable electrode) so as to melt the consumable material as well as a portion of the materials to be welded, which then may be cooled to form a weld.

While this traditional welding technique is an effective way of creating a robust joint between two materials, it is not without drawbacks. For example, it requires the use of a consumable material which means that to continuously weld, an equally continuous supply of consumable material must be present. Further, the introduction of a second material into the weld process may provide the opportunity for impurities and weaknesses to be formed in a component at the weld, for example in the case where the consumable material has not been produced to a high enough quality.

A method for overcoming the need for a consumable material has been provided by the Welding Institute of the UK with the invention of friction stir welding. Friction stir welding is a solid state joining process that uses frictional heat generated by a rotating tool to join materials, and does not require the use of a consumable material.

Friction stir spot welding (FSSW) is a solid-state joining technique derived from friction stir welding (FSW). Unlike FSW, FSSW does not involve linear tool motion, leading to a specific "spot" weld. Although this technology has attracted interest in a number of industries, its industrial adoption has been limited, mainly because of the exit-hole generated.

In response to these concerns, a further approach known as refill friction stir spot welding (Refill FSSW) had been developed. This innovative technique, outlined in WO 01/36144 A1, utilizes a redesigned tool to achieve spot welding without exit-hole by advancing a shoulder into the object to be welded while simultaneously retracting a probe being surrounded by the shoulder, with both the probe and the shoulder being rotated. During this movement, material plasticised by friction between the shoulder and the object to be welded and pushed out by the advancing shoulder is accommodated in the space created by the retreating probe. When the shoulder was advanced into the object up to a certain depth, the combined movement is reversed so that the shoulder is retracted while the probe is advanced towards the object with the displaced material pushed back into the recess created by the shoulder.

Although this conventional method of refill FSSW avoids using consumable material and exit holes, it still has certain limitations. For instance, in many cases, the fatigue life properties of refill FSSW is shorter than that of other joining techniques, particularly in load-bearing structures. While it is possible to influence the fatigue life properties of a refill FSSW by changing the parameters of the welding process itself, this only has a limited effect on the weld fatigue life properties.

It is an object of the present invention to overcome the aforementioned drawbacks while providing further advantages, as will be described herein.

A first aspect of the present invention relates to a method of refill friction stir spot welding. The method comprises providing a welding tool comprising a probe and a tubular shoulder, the probe being located inside and axially aligned with the tubular shoulder along a weld axis and the tubular shoulder being located inside and axially aligned with the clamping ring along the weld axis, and providing a support for securing a weld object to be welded thereto. The method further comprises arranging a weld object to the support, the weld object comprising at least two weld components, a first component comprising a weld surface and being located between the welding tool and the second component. The method additionally comprises locating a gap (e.g. a gap filled with air, gas or the like) between the weld surface and the support and locating the welding tool on the weld surface so as to align the gap with the weld axis, and rotating the probe and shoulder of the welding tool so as to heat the weld object and form a volume of increased plasticity in the weld object proximate the welding tool. The method comprises moving one of probe and the shoulder towards the weld object along the weld axis, and providing a force from the welding tool, in particular from the clamping ring, onto the weld object in the direction of the weld axis so as to deform the weld object into the gap.

In use, the method may enable two weld components to be welded together by deforming the weld components towards, and optionally partially into, the gap. During the weld process, the axial force provided by the welding tool, and in particular by the clamping ring, has the effect of plastically deforming the weld object as the refill friction stir spot weld is carried out. Since, during the welding process, the material is heated up, the plastic deformation occurs while the material is hot (for example, while the metal is above the recrystallisation temperature), thereby hot working the metal and providing enhanced properties of the weld once cooled. In particular, it has been discovered that the fatigue life properties may be increased by a factor of 10. or more.

The method may comprise that during rotation of the probe or shoulder one of the shoulder and the probe is advanced into the weld object while the other of the shoulder and the probe is withdrawn from its initial position in contact with the weld object so that plasticised material moves in a direction towards the other of the shoulder and the probe. Subsequently, during rotation of the the probe and the shoulder the one of the shoulder and the probe is retracted from the weld object while the other of the shoulder and the probe is advanced towards the weld object, so that the displaced plasticised material is forced back towards the weld object. Preferably, the shoulder is initially advanced into the weld object while the probe member is retracted.

Preferably, before the actual welding, the weld components that need to be joined are clamped by applying the clamping force through the clamping ring. Afterwards, preferably the actual welding process starts by rotating the probe and shoulder. The rotation creates friction between the components of the rotating tool and the material, which leads to heat generation. The plasticized material is displaced by the penetrating probe or shoulder and is accommodated in a cavity created by the probe or shoulder. At the end of the welding process, the shoulder or probe is pulled out of the material and the probe or shoulder pushes the plasticized material back to a flat surface.

The method may comprise locating the gap (e.g. the air gap) between the first weld component and the second weld component. The method may comprise forming a chamber defined in the second, and/or the first, weld component in which the gap is defined. The method may comprise defining a first boundary of the chamber by the second weld component and defining a second boundary of the container with the first weld component. Thus, the gap may be defined by the weld components themselves, enabling a user to, for example, preform the weld component such that the desired gap can be guaranteed to be present.

The method may comprise providing a recess in the second weld component and locating the recess adjacent to the first component so as to locate the gap between first and second weld components. As such the first component may be able to deform into the gap and into contact with the second weld component without any resistance from the second weld component.

The method may comprise positioning a spacer between the first and second weld components to provide an air gap therebetween. The spacer may be in the form of a sheet of material (e.g. with an aperture therein that may be aligned with the weld axis so as not to interfere with the weld process) or such as an O-ring. Having a spacer may remove the need to provide any preformed sections of the first and second component in order to ensure the presence of an air gap. The method may comprise removing the space from between the first and second weld components, after the first component has been welded to the second component.

The method may comprise securing the weld object to the support such that the second weld component is in contact with the support. The method may comprise locating the air gap between the second weld component and the support. The method may comprise providing a recess in the support and locating the second component adjacent to the recess so as to locate the air gap between the second component and the support. The method may comprise deforming the second weld component (partially) into the gap, and optionally deforming the first weld component into the gap. This method of welding may also provide the advantage that there is no need to preform either of the first or the second weld component before the weld process to ensure the presence of a gap therein.

The gap may be in the form of a spherical dome. The gap may be in the form of a truncated spherical dome. The gap may be in the form of a cone, or truncated cone.

The gap may be circular, oval, square, rectangular, polygonal, or the like, in shape, when viewed in alignment with the weld axis.

The method may comprise deforming (e.g. plastically deforming) both the first and the second weld components towards the gap. Alternatively, the method may comprise deforming only the first weld component towards the gap. The method may comprise deforming one or both of the first and second weld components into the gap. A plastically deformed component may be hot-worked in the area of plastic deformation, and therefore may experience enhanced fatigue life properties. Whether one or both of the first and second components are plastically deformed will affect the fatigue life properties, and the user may choose to deform one or both depending on the requirements of the weld.

The first component may be in the form of a first layer and the second component may be in the form of a second layer. In this case, the first and second weld components may be in the form of sheet components, or may comprise a planar shape. The method may comprise locating the welding tool on the first layer comprising the weld surface, and locating the first layer between the welding tool and the second layer.

The weld object may be a monolithic structure (e.g. a sheet curved into a cylindrical shape, where one end of the sheet defines the first component and the other end of the sheet defines the second component). Alternatively, the weld object may be formed of at least two units.

The gap may be filled with air, or may be filled with a gas that may assist in the welding process, such as a gas that may prevent oxidation of the components being welded.

A second aspect relates to an apparatus for providing refill friction spot welding. The apparatus comprises a welding tool comprising a probe and a shoulder, the probe being located inside and axially aligned with the shoulder along a weld axis, the welding tool being moveable along the weld axis, a support for supporting a weld object thereon, a weld object comprising at least two weld components, a first weld component comprising a weld surface and being located between the welding tool and a second weld component, and a gap located between the weld surface and the support, the gap being aligned with the weld axis.

The support may comprise a support surface located perpendicular to the weld axis.

### BRIEF DESCRIPTION

Figure 1 illustrates an example of a refill friction stir spot welding according to a known method;
Figure 2 and 2A comprise views of a welding tool and a weld object before and after welding;
Figures 3A to 3C illustrate steps in a first example of the described method;
Figures 4A to 6C illustrate steps in further examples of the described method.

### DETAILED DESCRIPTION

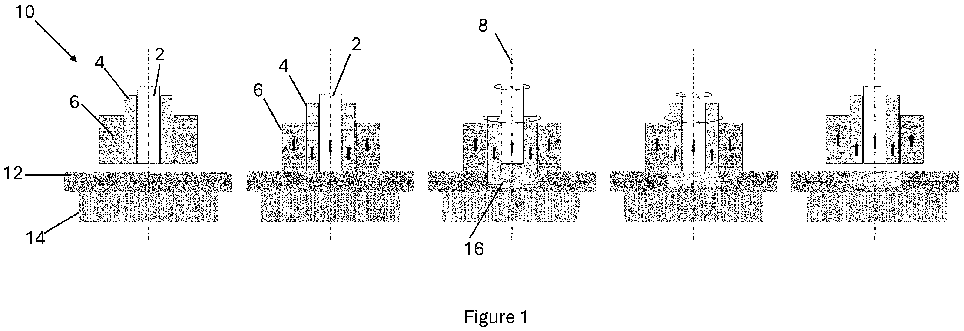

Figure 1 provides an example of a refill friction stir spot welding process according to a known method. Here, a welding tool 10 comprises a probe 2, a shoulder 4 and a clamping ring 6. The probe 2 is cylindrical in shape, while the shoulder 4 is in the form of a cylindrical shoulder, comprising a central recess. As is illustrated in Figure 1, the probe 2 is located in the central recess of the shoulder 4, and both the probe 2 and the shoulder 4 are positioned around a central or weld axis 8 of the welding tool 10. Although not illustrated, both the probe 2 and the shoulder 4 are connected to a drive member that is configured to rotate both the probe 2 and the shoulder 4 about the central axis 8, as well as move the clamping ring 6 in a translational direction along the central axis.

In operation, the welding tool 10 may be positioned near a weld object 12, as is shown in the leftmost image of Figure 1. The weld object 12 may be provided on a support 14, as is illustrated in Figure 1. The welding tool 10 may then be moved axially into contact with the weld object 12, so as to be in contact with a weld surface thereof, and may be pushed against the weld object 12 with a predetermined force so as to apply a pressure from the welding tool 10 onto the weld object 12, as is illustrated on the second leftmost image of Figure 1.

Maintaining the pressure on the weld object 12, both the probe 2 and the shoulder 4 may be rotated, thereby creating friction between the welding tool 10, i.e. the probe 2 and/or the shoulder 4, and the weld object 12, resulting in the generation of heat therebetween. The generated heat penetrates the material at the same time as the shoulder 4 is advanced into the weld object 12 from its initial position in contact with the weld object 12, and the probe 2 is withdrawn from its initial position in contact with the weld object 12. The generated heat from the rotation of the probe 2 and the shoulder 4 in contact with the weld object 12 causes the temperature of the weld object 12 in the vicinity of the welding tool 10 to rise and creates a plasticised volume 16 of the weld object, the plasticised volume being more malleable than the surrounding weld object.

As the shoulder 4 is driven into plasticised volume 16 of the weld object 12, and the probe 2 is withdrawn from its initial position, the plasticised volume 16 moves in an upwards direction towards the probe 2 as it is displaced by the shoulder 4 being driven into the weld object 12.

After a predetermined length of time and displacement of the probe 2 and the shoulder 4, both the probe 2 and the shoulder 4 are moved back towards their initial position, forcing the displaced plasticised material of the plasticised volume 16 back towards the weld object 12, as is illustrated in the second rightmost image of Figure 1. Finally, rotation of the probe 2 and the shoulder 4 may be stopped and the welding tool 10 removed from the surface of the weld object 12 to allow the plasticised volume to cool and the weld to set.

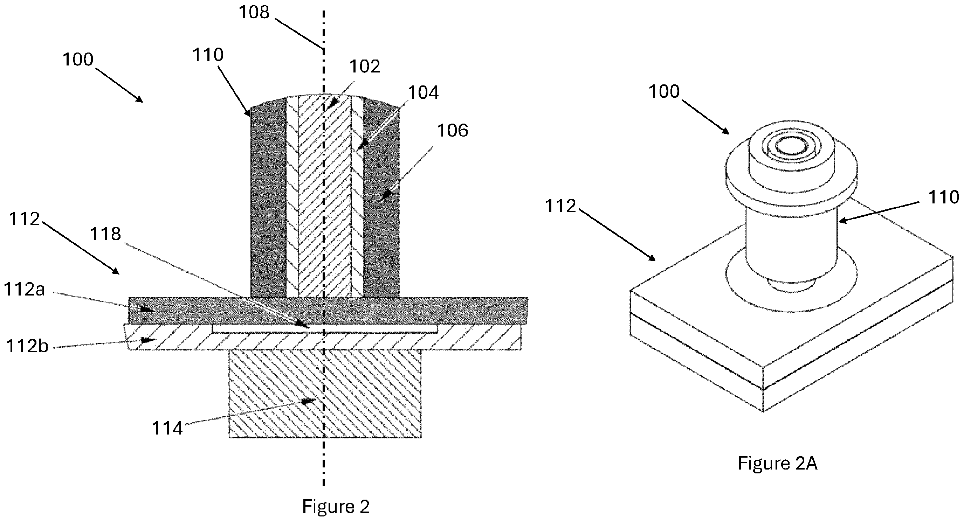

Figure 2 illustrates an apparatus 100 that may be used for a method of refill friction stir spot welding according to the present disclosure. Many of the features disclosed in Figure 2 are similar to those of Figure 1, and therefore similar reference numerals will be used for similar features, augmented by 100. It should also be noted that, according to the present disclosure, the operation of the welding tool 110 may be the same as that for the process of claim 1, and therefore there may be no need to reconfigure the welding tool 110 to operate in a manner that is not presently known.

The apparatus 100 comprises a welding tool 110 probe 102 and a shoulder 104. As with the example of Figure 1, a clamping ring 106 is part of the welding tool 110. As with the known example of Figure 1, the probe 102 is cylindrical in shape, while the shoulder 104 is in the form of a cylindrical shoulder comprising a central recess in which the probe 102 is located. Additionally illustrated in Figure 1 is a weld axis 108. Here, both the probe 102 and the shoulder 104 are positioned around the weld axis 108 of the welding tool 110 (e.g. such that the longitudinal axes of the probe 102 and the shoulder 104 are aligned with the weld axis 108). The longitudinal axes of the probe 102 and the shoulder 104 may additionally or alternatively be aligned with each other. It should be noted that the weld axis 108 may not necessarily be aligned with the axes of the probe 102 and the shoulder 104, although in this example it has been illustrated as such.

Although not illustrated, both the probe 102 and the shoulder 104 are connected to a drive member that is configured to rotate both the probe and the shoulder 104 about the weld axis 108, as well as move both in a translational direction, which in this example is along the weld axis 108.

As is illustrated in Figure 2, a weld object 112 is located on a support 114 such that the weld object 112 is positioned between the support 114 and the welding tool 110. In Figure 2, the welding tool 110 is shown as being in contact with the weld object 112, although this need not be the case upon initial positioning of the weld object 112 on the support 114. Rather, a gap may exist between the weld object 112 and the welding tool 110, before the welding tool 110 is then lowered onto the weld object 112. The clamp 106 is also lowered onto the weld object 112 to hold the weld object 112 in place on the support 114.

The weld object 112 comprises two weld components 112a, 112b in the example of Figure 2, although it should be noted that the present disclosure is not limited to the weld object 112 comprising two components, and the weld object 112 may instead comprise at least two weld components (e.g. more than two weld components) such as three weld components. Here, a first weld component 112a is positioned between a second weld component 112b and the welding tool 110, while the second weld component 112b is positioned between the first weld component 112a and the support 114. Between the first and second weld components 112a, 112b is located an air gap 118. The air gap 118 is, in this example, defined by the second component 112b. The second component 112b is oriented relative to the first component such that the air gap 118 is located adjacent to the first component 112a.

In the example of Figure 2, the air gap 118 is defined by a recess in the second component 112b. There may exist one single recess, or a plurality of recesses. The recess may have any appropriate form, for example may be in the form of a sphere cap, a cylinder, a cylindrical section cut from a plane extending parallel to the cylindrical axis, or the like. As can be seen in Figure 2, the recess extends the partial width of the second component 112b. In this example, the first component 112a is positioned on top of the second component 112b so as to provide a closed chamber in which the air gap 118 is located, where both the first and second component 112a, 112b define a boundary of the chamber. Further, as can also be seen in Figure 2 the air gap has dimensions that when seen in a plane perpendicular to the weld axis 108 it extends beyond the outer circumference of the clamping ring 106.

The first and second component 112a, 112b are shown here as being in the form of a layer or sheet of material. The width of each of the first and second component 112a, 112b (the length and breadth of the first and second component not being shown in this example) are substantially the same (excluding the portion of the second component 112b where the air gap 118 is located), although this need not necessarily be the case. In other examples, one of the first and second component 112a, 112b may be thicker than the other of the first and second component 112b, 112a.

The first and second component 112a, 112b together form the weld object 112. Before the weld has been formed, the first and second components 112a, 112b may be part of one single unit (e.g. of a monolithic structure) such as a single sheet of material that is being bent, folded, curved, etc. around on itself (e.g. in the form of a shoulder or hollow cylinder). Alternatively, the first and second components 112a, 112b may be separate, and part of two individual units.

Figure 2A is an isometric view of an apparatus 100 comprising a welding tool 110 and a weld object 112, and illustrates a process after the weld has been formed. As such, the circular weld can be seen on the surface of the weld object 112.

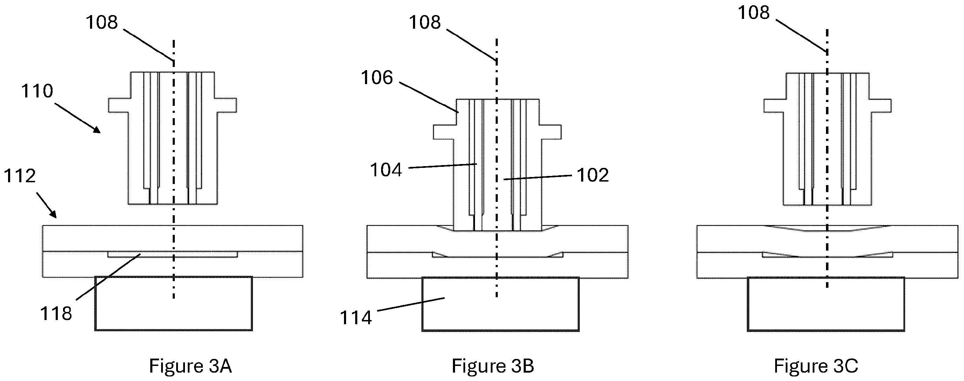

Figures 3A-C illustrate steps in the method of refill friction stir spot welding.

In Figure 3A, the weld object 112 is located on the support and secured thereto by a securing means such as a clamp. The welding tool 110 is provided adjacent to the weld object 112 and the welding tool 110 and the weld object 112 are aligned such that the air gap 118 of the weld object 112 is intersected by the weld axis 108. The weld axis 108 here intersects the centre of the air gap 118. The centre of the air gap 118 may be the geometric centre, or substantially the geometric centre, of the cross-section taken from a plane perpendicular to the weld axis 108. In other examples, the weld axis 108 may be offset from the centre of air gap 118. It should be noted that the diameter or width of the air gap 118 is greater than the diameter of the clamping ring 110.

In Figure 3B, the welding tool 110 is lowered onto the surface of the weld object 112 and the probe 102 and shoulder 104 are rotated in contact with the weld object 112 so as to create friction and heat at the interface. The contact between the weld tool 110 and the weld object 112 also includes contact between the clamping ring 106 and the weld object 112 so as to provide a force acting in the direction of the weld axis 108 towards the support 114, thereby securing the weld object 112 to the support 114, or assisting to secure the weld object 112 to the support 114.

The probe 102 and the shoulder 104 are then rotated about the weld axis 108 so as to generate heat and start the welding process. The probe 102 and the shoulder 104 may be moved to into or from the surface of the weld object 112 so as to form the weld, for example in line with the description of Figure 1, or in a similar way so as to form the weld. As friction and heat are generated by the rotation of the probe 102 and the shoulder 104 to perform the weld, a force is continually applied by the welding tool 110 and the clamping ring 106 along the weld axis 108. The first weld component 112a located between the welding tool 110 and the air gap 118 (and the second component 112b, in this example) heats up at the location of the weld and is deformed (e.g. plastically deformed) as a result of the axial force applied by the clamping ring 106 into the air gap 118 while the material of the first component 112a is still hot, thus hot-working the material in the region of deformation, as can be seen in Figure 3B. The weld is then formed with the first component 112a deformed into the air gap 118, thus creating a region of material in the first component 112a around the weld site where the material has been hot worked.

As illustrated in Figure 3C, once the weld has been performed, the welding tool 110 is retracted from the weld object 112. Having the hot-worked material region around the weld site has been found to significantly increase the fatigue life properties of the weld by at least a factor of 10 or more.

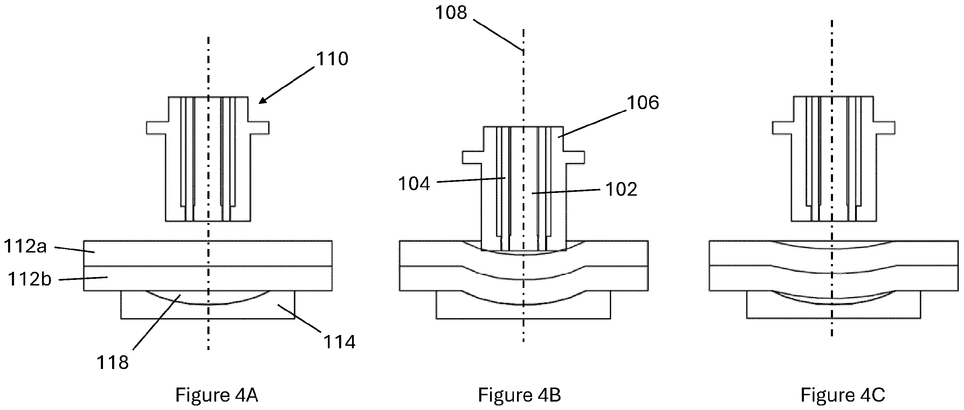

Figures 4A to 4C illustrate a further embodiment of the method described in relation to Figures 3A to C. In the embodiment of Figures 4A to C, the air gap 118 is located between the second component 112b and the support 114, as opposed to being located between the first and second components 112a, 112b. In particular, the air gap 118 is positioned adjacent the second component 112b, and the second component defines a boundary (here, an upper boundary) of a chamber in which the air gap 118 is located, with the support 114 forming the remainder of the boundary. The support 114 therefore comprises a recess therein in which the air gap 118. The method is then able to be performed as in the steps 3A to 3B in that the welding tool 110 is brought into contact with the weld object 112 on the weld surface thereof and rotated to generate heat therebetween, while an axial force along the weld axis 108 and in the direction of the weld object 112 and support 114 is applied to the weld object 112 to plastically deform the weld object in the direction of the air gap 118. By comparing Figures 4B and 4C, it can be observed that there may additionally be some elastic deformation of the first and second weld components 112a, 112b caused by the axial force from the welding tool 110.

In this example, both the first and second component 112a, 112b of the weld object 112 deform in the direction of the air gap 118. Therefore, both the first and second components are plastically deformed as the method is performed, and therefore hot working may be present in both the first and second components 112a, 112b. In comparison, the method of Figures 3A to 3C only involves providing hot working in the first weld component 112a. Each of the variations of the method as shown in Figures 3A to 3C and 4A to 4C may be used advantageously to vary the properties of the final weld, depending on the eventual use of the product in question, and therefore may provide the user with the ability to vary the properties of the weld based on the desired use.

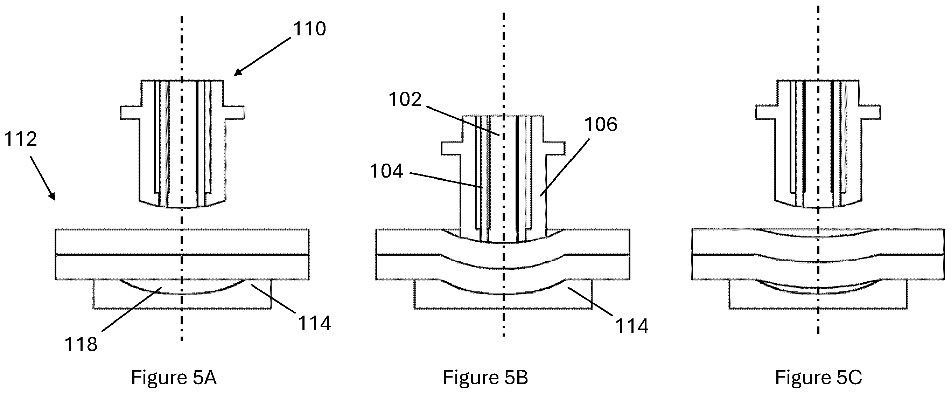

Figures 5A to 5C illustrate an example similar to that of Figures 4A to 4C, except that in Figures 5A to 5C the welding tool 110 has a curved profile where the welding tool 110 comes into contact with the weld object 112. In particular, the end surface of the probe member 102 that comes into contact with the weld object 112 has a domed shape in this example, while the end surface of the shoulder 104 similarly has a domed shape in which a central section has been removed having the diameter of the probe 102. In addition, the end surface of the clamp 106 is also domed in shape, with a central section removed having the diameter of the shoulder 104.

The method followed in Figures 5A to 5C is similar to that of Figures 4A to 4C. However, in this embodiment of the method, the curved or domed shape of the welding tool 110 may assist to provide a weld that additionally has a dome shape, or a more domed shape than previously described method embodiments, which may provide preferential material properties for some applications of the product in which the weld is located.

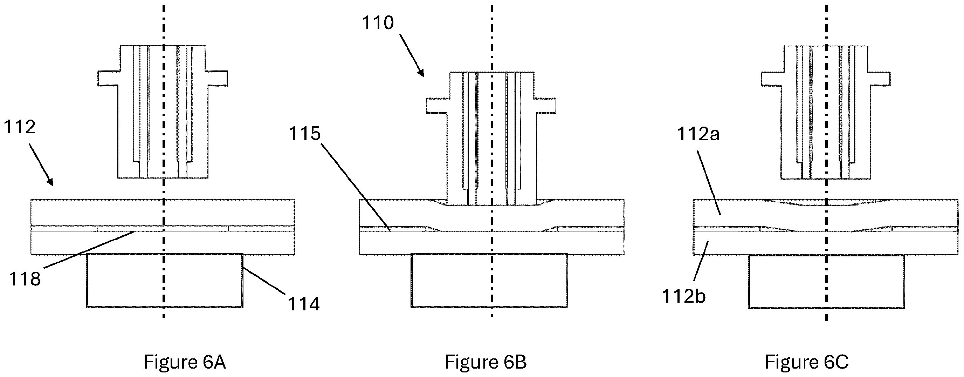

Figures 6A to 6C illustrate an example of an embodiment of the method in which a spacer 115 is located between the weld objects 112 providing an air gap 118. Therefore, in this example, neither the first nor the second weld component 112a, 112b may need to be preformed in any way so as to provide a recess, as is the case in Figure groups 3 to 5. Rather, the spacer 115 may be in the form of a sheet of material (for example, a rubber sheet, metal sheet, or the like) or may be in the form of a ring or loop of a material such as an O-ring. Once the spacer 115 has been positioned between the first and second component 112a, 112b, the method may be performed in a similar manner as in the previous method embodiments, and in particular to the method embodiment of Figure group 3. The spacer 115 may be optionally removed after the weld has taken place.

In the examples of Figure groups 3 and 6, the weld may have a domed shape, or may be in the shape (or closed to the shape) of a truncated cone, as can be seen from Figure groups 3 and 6.

In testing, a weld using a known process (such as that described in Figure 1) was carried out, as well as a weld using the described method. During shear tensile loading (2990N) the known weld was able to withstand 255,000 cycles, while the weld made according to the described method was able to endure more than 10M cycles. During a cross tenson loading case (1422N), an increase from 88k to 1.8M cycles was achieved. As such, the effects of a weld according to the described method can be demonstrated.

The method of friction stir spot welding and the described apparatus may be as above, although the skilled reader will appreciate that some deviations to the method would be within the scope of knowledge of the skilled reader.

## Claims

1. A method for refill friction stir spot welding, comprising:
providing a welding tool (no) comprising a probe (102), a tubular shoulder (104) and clamping ring (106), the probe (102) being located inside and axially aligned with the tubular shoulder (104) along a weld axis (108) and the tubular shoulder (104) being located inside and axially aligned with the clamping ring (106) along the weld axis;
providing a support (114) for securing a weld object (112) to be welded thereto;
arranging a weld object (112) to the support (114), the weld object (112) comprising at least two weld components (112a, 112b), a first component (112a) comprising a weld surface and being located between the welding tool and the second component;
locating a gap (118) between the weld surface and the support (114);
locating the welding tool (no) on the weld surface so as to align the gap (118) with the weld axis (108);
rotating the probe (102) and the shoulder (104) so as to heat the weld object (112) and form a volume of increased plasticity in the weld object (112) proximate the welding tool (110);
moving one of the probe (102) and the shoulder (104) towards the weld object (112) along the weld axis (108);
providing a force from the welding tool (no) onto the weld object (112) in the direction of the weld axis (108) so as to deform the weld object (112) into the gap (118).

2. The method of claim 1, wherein during rotation of the probe (102) and the shoulder (104) one of the shoulder (104) and the probe (102) is advanced into the weld object (112) while the other of the shoulder (104) and the probe (102) is withdrawn from its initial position in contact with the weld object (112) so that plasticised material moves in a direction towards the other of the shoulder (104) and the probe (102) and
wherein subsequently during rotation of the probe (102) and the shoulder (104) the one of the shoulder (104) and the probe (102) is retracted from the weld object (112) while the other of the shoulder (104) and the probe (102) is advanced towards the weld object (112), so that the displaced plasticised material is forced back towards the weld object (112).

3. The method of claim 1 or 2, comprising locating the gap (118) between the first weld component (112a) and the second weld component (112b).

4. The method of any preceding claim, comprising providing a recess in the second weld component (112b) and locating the recess adjacent to the first component (112a) so as to locate the gap (118) between first and second weld components (112a, 112b).

5. The method of any preceding claim, comprising positioning a spacer (115) between the first and second weld components (112a, 112b) to provide a gap therebetween.

6. The method of claim 1 or 2, comprising locating the gap (118) between the second weld component (112b) and the support (114).

7. The method of claim 6, comprising providing a recess in the support (114) and locating the second component (112b) adjacent to the recess so as to locate the gap (118) between the second component (112b) and the support (114).

8. The method of any preceding claim, wherein the gap (118) is in the form of a spherical dome.

9. The method of any preceding claim, comprising deforming both the first and the second weld components (112a, 112b) towards the gap (118).

10. The method of any of claims 1 to 8, comprising deforming only the first weld component (112a) into the gap (118).

11. The method of any preceding claim, comprising clamping the weld object (112) onto the support (114) with the clamping ring (106).

12. The method of any preceding claim, wherein the first component (112a) is in the form of a first layer and the second component (112b) is in the form of a second layer, and comprising locating the welding tool (no) on the first layer comprising the weld surface, and locating the first layer between the welding tool (110) and the second layer.

13. The method of claim of any preceding claim, wherein the weld object (112) is a monolithic structure.

14. An apparatus for providing refill friction spot welding, comprising:
a welding tool (no) comprising a probe member (102) and a tubular shoulder (104), the probe member (102) being located inside and axially aligned with the tubular shoulder (104) along a weld axis (108), the welding tool (no) being moveable along the weld axis (108);
a support (114) for supporting a weld object (112) thereon;
a weld object (112) comprising at least two weld components (112a, 112b), a first weld component (112a) comprising a weld surface and being located between the welding tool (110) and a second weld component (112b); and
a gap (118) located between the weld surface and the support (114), the gap (118) being aligned with the weld axis (108).

15. The apparatus of claim 14, wherein the welding tool (110) comprises a clamp (106) in the form of a shoulder located around the tubular shoulder (104).

16. The apparatus of claim 14 or 15, wherein the support (114) comprises a support surface located perpendicular to the weld axis (108).
